# EUROPEAN PATENT APPLICATION

(11) **EP 4 295 666 A1**
(43) Date of publication of application: **27.12.2023**
(21) Application number: 23177337.5
(22) Date of filing: 05.06.2023
(51) Int. Cl.: A01F 15/08, B41F 17/00

(54) **BALER IMPLEMENT AND PRINT SYSTEM FOR MARKING A BALE**

(30) Priority: 21.06.2022 US 202217808004
(71) Applicant: Deere & Company, Moline, IL 61265 (US)
(72) Inventor: PONKSHE, SAMPADA, 68163 Mannheim (DE); JADHAO, UMESH B, 68163 Mannheim (DE); SHOOK, GERALD, 68163 Mannheim (DE)
(74) Representative: Stein, Stefan

(57) **Abstract**

A baler implement includes a print system selectively configurable to print a plurality of available alpha-numeric characters on the bale. A marker controller is operable to receive data from a sensor related to a characteristic of the bale and then select a desired alpha-numeric character from the available alpha-numeric characters based on the data from the sensor. The marker controller may then configure the print system to select the desired alpha-numeric character, and actuate the print system to imprint the desired alpha-numeric character onto the bale, thereby marking the bale with the desired alpha-numeric character to communicate the characteristic of the bale.

## Description

### TECHNICAL FIELD

The disclosure generally relates to a baler implement for forming material into a bale, and a print system of the baler implement for imprinting a desired alpha-numeric character onto the bale.

### BACKGROUND

Many different materials may be formed into a bale for transportation and/or storage. The material may include, but is not limited to, forage material such as hay, alfalfa, corn stalks, etc.; cotton; paper; etc. The bales may be formed to include, but are not limited to, a parallelepiped shape or a cylindrical shape. Bales having a parallelepiped shape are generally formed by compressing the material into a flake within a rectangular compression chamber, and then bundling multiple flakes together to form the bale. Bales having a cylindrical shape are generally formed by continuously feeding the material into a cylindrical forming chamber and rolling the material in a spiral fashion into the bale having the cylindrical shape.

The material forming each respective bale may have different and unique characteristics that an operator may wish to track and/or monitor. For example, each bale may have a respective weight, moisture content, ash content, variety of material content, weed content, nutritional content, etc. In some operations, it is useful for the operator to be able to track and identify the characteristics for each individual bale. By doing so, for example, the operator may separate bales of higher quality from bales of lower quality, and sell/use them accordingly.

Previously, it is known to attach an electronic identification tag, such as an RFID tag, to each bale, and assign the electronic identification tag a specific identification number. Specific characteristics of the bale may then be associated with the specific identification number. The electronic identification tag may be read/scanned to identify the identification number, and then the associated characteristics of that bale may be retrieved. This process of data communication requires the user have/use a specialized device, i.e., the scanner/reader, to obtain the data associated with the bale.

It is also known to paint each bale with a mark. The mark may include a color representing a general characteristic of the bale. For example, a bale having a green circle may indicate a moisture content below an allowable threshold, i.e., an acceptable moisture content, whereas a red circle may indicate a moisture content above the allowable threshold, i.e., a non-acceptable moisture content. This process is not able to communicate high levels of detail and/or data with accuracy.

### SUMMARY

A baler implement is provided. The baler implement includes a bale formation system having a baling chamber that is operable to form material into a bale. A sensor is arranged and operable to detect data related to a characteristic of the bale. A print device is selectively configurable to print a plurality of available alpha-numeric characters on the bale. A marker controller is disposed in communication with the sensor and the print device. The marker controller includes a processor and a memory having a marking algorithm stored thereon. The processor is operable to execute the marking algorithm to receive data from the sensor related to the characteristic of the bale. The marker controller may then select a desired alpha-numeric character from the plurality of available alpha-numeric characters, based on the data from the sensor, to communicate the characteristic of the bale. The marker controller may then actuate the print device to imprint the desired alpha-numeric character onto the bale, thereby marking the bale with the desired alpha-numeric character to communicate the characteristic of the bale.

In one aspect of the disclosure, the print device may include a print device having a plurality of individual print segments that are actuatable in a plurality of combinations. Each individual one of the plurality of combinations forms and/or prints a respective one of the plurality of available alpha-numeric characters. In one implementation, the plurality of individual print segments includes seven individual print segments. The seven individual print segments are arranged in a numeric eight configuration. The individual print segments may be selected to form the Arabic numeric characters zero (0) through nine (9), and uppercase and lowercase characters of the English alphabet a, b, c, ... , z.

In one aspect of the disclosure, the processor is operable to execute the marking algorithm to select a combination of the plurality of individual print segments of the print device to form the desired alpha-numeric character.

In one implementation of the disclosure, each of the plurality of individual print segments is independently controllable to apply a marking mixture to the bale. The marking mixture may include, but is not limited to, one of a paint, a die, or an ink.

In one implementation of the disclosure, the baler implement may include an actuator. The actuator may be coupled to the print device and operable in response to a control signal from the marker controller to move the print device. The actuator may move the print device into abutting engagement with the bale to imprint the desired alpha-numeric character onto the bale, and further move the print device out of abutting engagement with the bale when not marking the bale.

In one implementation of the disclosure, the sensor may include a moisture sensor operable to sense data related to a moisture content of the bale, and the characteristic of the bale may include a moisture content of the bale. In another implementation of the disclosure, the sensor may include an identification sensor operable to sense data related to an identifier of the bale, and the characteristic of the bale includes an identification of the bale. In yet another implementation of the disclosure, the sensor may include a weight sensor operable to sense data related to a weight of the bale, and the characteristic of the bale includes the weight of the bale.

In one implementation of baler implement, the baler implement may include a second print device. The second print device may be positioned adjacent the print device, i.e., the first print device. The second print device may include a plurality of individual print segments that are actuatable in a plurality of combinations, with each individual one of the plurality of combinations of the second print device forming a respective one of the plurality of available alpha-numeric characters. The first print device and the second print device may be actuatable in unison to simultaneously imprint two of the plurality of available alpha-numeric characters onto the bale to form the desired alpha-numeric character onto the bale.

Accordingly, the baler implement and the print system described herein print the alpha-numeric characters onto the bale. The alpha-numeric characters are capable of easily communicating greater and more accurate details related to the characteristic of the bale then previously known color code marking systems, without the expense and extra equipment required to use previously known electronic data tags, e.g., RFID tags. The print system described herein prints the alpha-numeric characters onto the bale, whereby a user may easily read the specific data/details described therewith, such as for example, the weight of the bale, the moisture content of the bale, the size of the bale, the identification number of the bale, the crop type of the bale, etc.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic side view of a baler implement.
FIG. 2 is a schematic side view of a print system of the baler implement.
FIG. 3 is a schematic end view of the print system.
FIG. 4 is a schematic perspective view of a bale showing a desired alpha-numeric character printed thereon.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

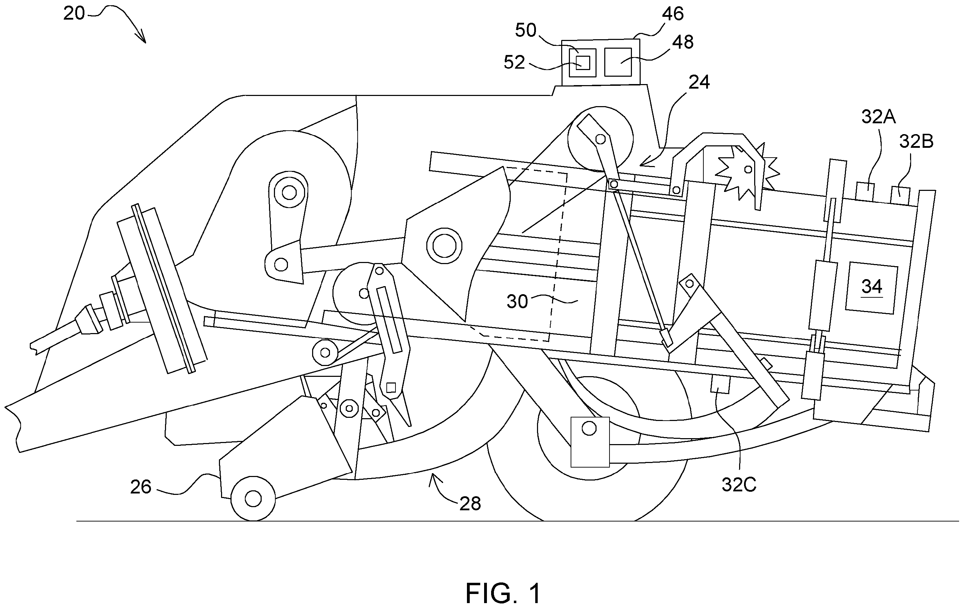

Referring to the Figures, wherein like numerals indicate like parts throughout the several views, a baler implement is generally shown at 20 in FIG. 1. Referring to FIG. 1, the baler implement 20 forms material into a bale 22. The example implementation of the baler implement 20 is shown as a large square baler that forms the crop material into a parallelepiped shape. However, it should be appreciated that the teachings of this disclosure may be applied to other types and/or configurations of the baler implement 20, such as but not limited to, a round baler that forms the crop material into a cylindrical shape.

The baler implement 20 includes a bale formation system 24 for forming material into the bale 22. The specific features, components, and operation of the bale formation system 24 are dependent upon the type of the baler implement 20. For example, if the baler implement 20 is configured as a large square baler, such as the example implementation shown in the figures and described herein, then the bale formation system 24 may include a pick-up 26 that gathers the crop material and a feeder system 28 that feeds the crop material into a compression chamber 30. the compression chamber 30 may alternatively be referred to as a baling chamber 30. A crank arm is connected to an output of a transmission. A connecting link interconnects the crank arm and a plunger. The crank arm rotates based upon the output of the transmission and the plunger moves in a reciprocal motion within the baling chamber 30 as the crank arm rotates. The plunger extends into the baling chamber 30, thereby compressing the crop material, and then at least partially retracts from the baling chamber 30 to allow the feeder system 28 to move more crop material into the compression chamber 30. The general features and operation of the bale formation system 24 of the large square baler are understood by those skilled in the art, are not pertinent to the teachings of this disclosure, and are therefore not described in greater detail herein.

If the baler implement 20 is configured as a round baler, then the bale formation system 24 may be configured as a variable chamber baler, or as a fixed chamber baler. When configured as a variable chamber baler the bale formation system 24 includes a plurality of longitudinally extending side-by-side forming belts that are supported by a plurality of rollers. The bale 22 is formed by the forming belts and one or more side walls of a housing. The crop material is directed through an inlet and into a baling chamber 30, whereby the forming belts roll the crop material in a spiral fashion into the bale 22 to form a cylindrical shape. The belts apply a constant pressure to the crop material as the crop material is formed into the bale 22. A belt tensioner continuously moves the forming belts radially outward relative to a center of the cylindrical bale 22 as the diameter of the bale 22 increases. The belt tensioner maintains the appropriate tension in the belts to obtain the desired density of the crop material. When configured as a fixed chamber baler, the bale formation system 24 includes a plurality of rollers fixed in position to define a circular forming chamber. The crop material is directed through an inlet and into the forming chamber, whereby at least one of the rollers rotates to rotate the crop material in a spiral fashion, thereby forming the bale 22 into the cylindrical shape. The general features and operation of the bale formation system 24 of the variable chamber round baler and the fixed chamber round baler are understood by those skilled in the art, are not pertinent to the teachings of this disclosure, and are therefore not described in greater detail herein.

The baler implement 20 further includes a banding/wrap system. The banding system is operable to bind the bale 22 of material with at least one band/wrap of wrap material. The wrap material may include, but is not limited to, a polymer band, a twine strand, a solid wrap, or a net/mesh wrap. The features, components, and operation of the banding/wrap system are dependent upon the type and configuration of the bale formation system 24, are known to those skilled in the art, and are therefore not described in greater detail herein.

The baler implement 20 includes a sensor 32A, 32B, 32C. The sensor 32A, 32B, 32C may include one or more sensors 32A, 32B, 32C. The sensor 32A, 32B, 32C is arranged and operable to detect data related to a characteristic of the bale 22. The position of the sensor 32A, 32B, 32C and the type of data collected is dependent upon the characteristic of the bale 22 being monitored and may vary with different applications. For example, in one implementation of the disclosure, the sensor 32A, 32B, 32C may include a moisture sensor 32A operable to sense data related to a moisture content of the bale 22, and the characteristic of the bale 22 includes a moisture content of the bale 22. The moisture sensor 32A may include any device capable of sensing data related to the moisture content of the material forming the bale 22. For example, the moisture sensor 32A may include, but is not limited to, a moisture probe, an NIR sensor, electromagnetic wave sensor, etc. Various types of moisture sensors 32A and the operation thereof are understood by those skilled in the art and are therefore not described in greater detail herein.

In another implementation of the disclosure, the sensor 32A, 32B, 32C may include an identification sensor 32B operable to sense data related to an identifier of the bale 22, and the characteristic of the bale 22 includes an identification of the bale 22. The identification sensor 32B may include, but is not limited to, a bale counter. The identifier may include, for example, a sequential number of the bale 22 formed during a particular harvest operation, in a particular field, during a particular day, etc. For example, the identification sensor 32B may sense or detect the number of the bale 22 created that day, and the identifier of the bale 22, i.e., the characteristic of the bale 22, may be defined to equal that number.

In another implementation of the disclosure, the sensor 32A, 32B, 32C may include a weight sensor 32C that is operable to sense data related to a weight of the bale 22, and the characteristic of the bale 22 may include the weight of the bale 22. The weight sensor 32C may include any device capable of sensing data related to the weight of the bale 22. For example, the weight sensor 32C may include, but is not limited to, a force sensor coupled to a component of the baler implement 20 supporting the bale 22. Various types of weight sensors 32C and the operation thereof are understood by those skilled in the art and are therefore not described in greater detail herein.

As noted above, the sensor 32A, 32B, 32C may include one or more sensing devices. As such, it should be appreciated that the sensor 32A, 32B, 32C may include one or more of the example implementations of the sensor 32A, 32B, 32C described above. Additionally, it should be appreciated that the sensor 32A, 32B, 32C may include other devices, independent of or in addition to the examples described above, that are not mentioned or described herein. As such, the sensor 32A, 32B, 32C and the characteristics of the bale 22 described herein are merely examples and the scope of the sensor 32A, 32B, 32C and the characteristic of the bale 22 are not limited to the example implementations described herein.

The baler implement 20 further includes a print system 34. The print system 34 is selectively configurable to print a plurality of available alpha-numeric characters on the bale 22. The plurality of available alpha-numeric characters may include for example, but are not limited to, the Arabic numeric characters zero (0) through nine (9), as well as uppercase and/or lowercase characters of the English alphabet "A, a, B, b, C, c, ..., Z, z".

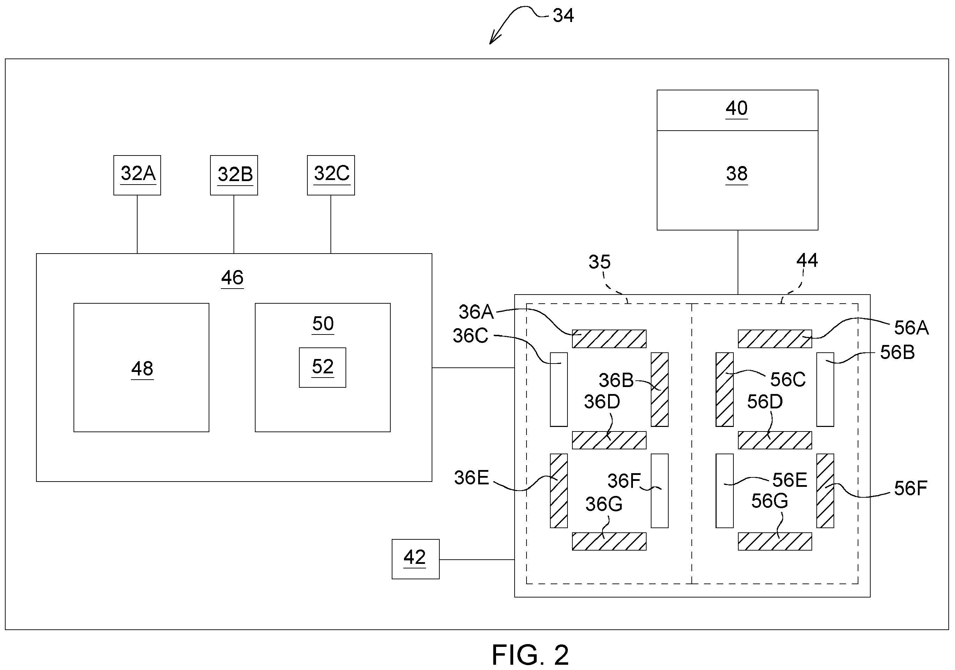

For example, in one implementation of the disclosure, the print system 34 may include a print device 35 having a plurality of individual print segments 36A through 36G that are actuatable in a plurality of combinations. Each individual one of the plurality of combinations forms a respective one of the plurality of available alpha-numeric characters. For example, referring to FIG. 2, the plurality of individual print segments may include seven individual print segments 36A through 36G. The seven individual print segments 36A through 36G are arranged in a number eight (8) configuration. It should be appreciated that this arrangement of the individual print segments 36A through 36G enables combinations thereof to form the Arabic numeric characters zero (0) through nine (9), as well as uppercase and/or lowercase characters of the English alphabet "A, a, B, b, C, c, ..., Z, z".

Each of the plurality of individual print segments 36A through 36G is independently controllable to apply a marking mixture 38 to the bale 22. The marking mixture 38 may include, but is not limited to, one of a paint, a die, or an ink. The composition of the marking mixture 38 may depend upon, but is not limited to, a desired color of the marking mixture 38, the material of the bale 22, the intended use of the material of the bale 22 (e.g., recycled paper vs. an animal feed product), a desired UV resistance of the marking mixture 38, etc. The print device 35 may include a tank or reservoir 40 storing the marking mixture 38. In one implementation, each of the individual print segments 36A through 36G may include a separate and independent reservoir 40 of the marking mixture 38. In other implementations, the print system 34 may include a single reservoir 40 of the marking mixture 38 for all or a portion of the individual print segments 36A through 36G

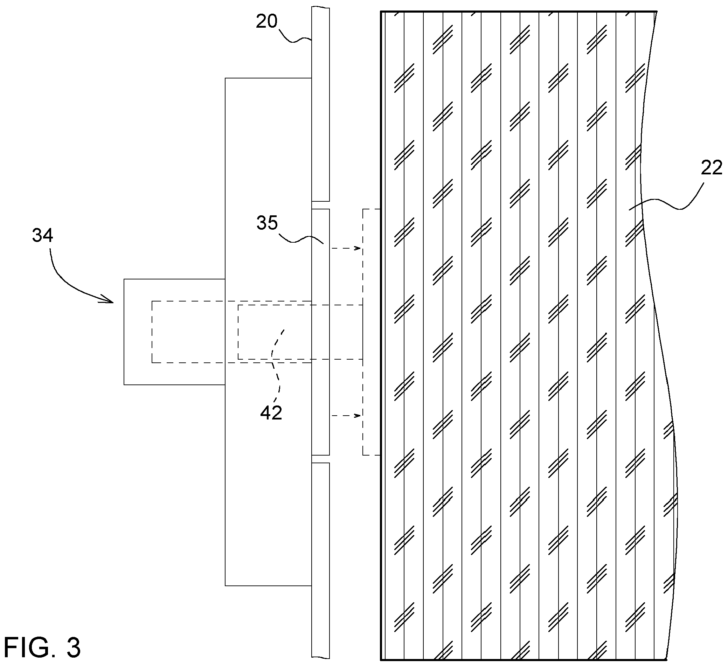

The baler implement 20 and/or the print system 34 may further include an actuator 42. The actuator 42 is coupled to the print device 35 and is operable in response to a control signal from a marker controller 46. The actuator 42 is operable to engage the print device 35 and thereby cause the print device 35 to imprint, spray, or otherwise mark the bale 22 with the desired alpha-numeric character 54 formed by the print device 35. Referring to FIG. 3, in one implementation, the actuator 42 is operable to move the print device 35 near or into abutting engagement with the bale 22 to imprint or spray the marking mixture 38 onto the bale 22 to imprint the desired alpha-numeric character 54 onto the bale 22, and to move the print device 35 away from and/or out of abutting engagement with the bale 22 when not marking the bale 22. As shown in FIG. 3, the print device 35 is shown in solid lines spaced from the bale 22, and is shown in phantom positioned adjacent the bale 22 for printing the desired alpha-numeric character 54 onto the bale 22.

The actuator 42 may include any device and/or system of components capable of moving the print device 35 toward and away from the bale 22. For example, the actuator 42 may include a linear or rotary actuator 42 that moves the print device 35 into abutting engagement with the bale 22. The actuator 42 may further include linkages, connections, pivots, etc., interconnecting the actuator 42 and the print device 35.

Referring to FIG. 2, in one implementation, the baler implement 20 may further include a second print device 44. The second print device 44 may be positioned adjacent the first print device 35. The second print device 44 may be configured similarly to the first print device 35. For example, the second print device 44 may include a plurality of individual print segments 56A through 56G that are actuatable in a plurality of combinations. Each individual one of the plurality of combinations of the second print device 44 forms a respective one of the plurality of available alpha-numeric characters. The first print device 35 and the second print device 44 may be actuatable in unison to simultaneously imprint two of the plurality of available alpha-numeric characters onto the bale 22 to form the desired alpha-numeric character 54 onto the bale 22. For example, if the desired alpha-numeric character 54 includes two characters/digits, then the first print device 35 and the second print device 44 may be engaged simultaneously to imprint both characters/digits of the desired alpha-numeric character 54 onto the bale 22. While the example implementation described herein is shown with the first print device 35 and the second print device 44, it should be appreciated that the print system 34 may include any number of print devices, e.g., three, four or five print devices. Additionally, it should be appreciated that multiple print devices may be arranged at different locations relative to the bale 22 to print different characters onto different locations of the bale 22 to communicate different characteristics of the bale 22.

As noted above, the baler implement 20 further includes the marker controller 46. The marker controller 46 is disposed in communication with the sensor 32A, 32B, 32C, the actuator 42, and the print system 34/print device 35 44. The marker controller 46 is operable to receive data signals from the sensor 32A, 32B, 32C, and communicate a signal to the actuator 42 and the print device 35, 44. While the marker controller 46 is generally described herein as a singular device, it should be appreciated that the marker controller 46 may include multiple devices linked together to share and/or communicate information therebetween. Furthermore, it should be appreciated that the marker controller 46 may be located on the baler implement 20 or located remotely from the baler implement 20.

The marker controller 46 may alternatively be referred to as a computing device, a computer, a controller, a control unit, a control module, a module, etc. The marker controller 46 includes a processor 48, a memory 50, and all software, hardware, algorithms, connections, sensors, etc., necessary to manage and control the operation of the actuator 42, and the print device 35, 44. As such, a method may be embodied as a program or algorithm operable on the marker controller 46. It should be appreciated that the marker controller 46 may include any device capable of analyzing data from various sensors, comparing data, making decisions, and executing the required tasks.

As used herein, "marker controller 46" is intended to be used consistent with how the term is used by a person of skill in the art, and refers to a computing component with processing, memory 50, and communication capabilities, which is utilized to execute instructions (i.e., stored on the memory 50 or received via the communication capabilities) to control or communicate with one or more other components. In certain embodiments, the marker controller 46 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The marker controller 46 may be in communication with other components on the baler implement 20, such as hydraulic components, electrical components, and operator inputs within an operator station of an associated work vehicle. The marker controller 46 may be electrically connected to these other components by a wiring harness such that messages, commands, and electrical power may be transmitted between the marker controller 46 and the other components. Although the marker controller 46 is referenced in the singular, in alternative embodiments the configuration and functionality described herein can be split across multiple devices using techniques known to a person of ordinary skill in the art.

The marker controller 46 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 50 may include any non-transitory/tangible medium which participates in providing data or computer-readable instructions. The memory 50 may be non-volatile or volatile. Non-volatile media may include, for example, optical or magnetic disks and other persistent memory. Example volatile media may include dynamic random access memory (DRAM), which may constitute a main memory. Other examples of embodiments for memory 50 include a floppy, flexible disk, or hard disk, magnetic tape or other magnetic medium, a CD-ROM, DVD, and/or any other optical medium, as well as other possible memory devices such as flash memory.

The marker controller 46 includes the tangible, non-transitory memory 50 on which are recorded computer-executable instructions, including a marking algorithm 52. The processor 48 of the marker controller 46 is configured for executing the marking algorithm 52. The marking algorithm 52 implements a method of marking the bale 22, described in detail below.

During operation of the baler implement 20, the sensor 32A, 32B, 32C senses data related to the characteristic of the bale 22. As described above, the data may be related to a moisture content of the bale 22, an identification number of the bale 22, a weight of the bale 22, etc. The sensor 32A, 32B, 32C communicates the data to the marker controller 46, which in turn receives the data from the sensor 32A, 32B, 32C related to the characteristic of the bale 22.

The marker controller 46 then selects a desired alpha-numeric character 54 from the plurality of available alpha-numeric characters based on the data from the sensor 32A, 32B, 32C. The desired alpha-numeric character 54 is selected to effectively, accurately, and quickly communicate the characteristic of the bale 22 to a user. In other words, the desired alpha-numeric character 54 is selected such that the user may read the desired alpha-numeric character 54 to discern the characteristic of the bale 22, without the need to correlate symbology and/or without the need for electronic scanners/readers.

Once the marker controller 46 has selected the desired alpha-numeric character 54, the marker controller 46 may then configure the print device 35 for the desired alpha-numeric character 54. For example, in the implementation shown in the Figures and described herein, the marker controller 46 may select the combination of the individual print segments of the print device 35 required to form the desired alpha-numeric character 54. For example, if the desired alpha-numeric character 54 is the number "25", describing a moisture content of twenty five percent, then the marker controller 46 may configure the first print device 35 to form the number "2" and the second print device 44 to form the number "5", such as shown in FIG. 2.

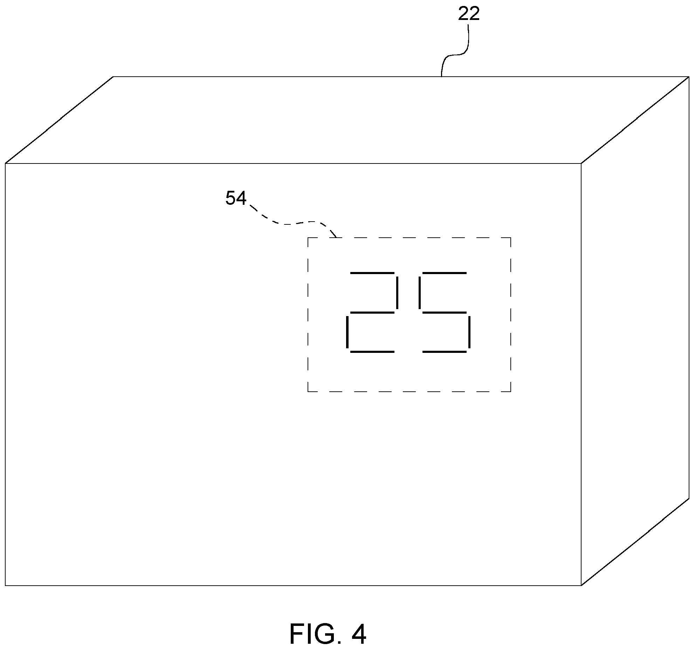

Once the print device 35 has been configured to form the desired alpha-numeric character 54, the marker controller 46 may then actuate the print device 35 to imprint the desired alpha-numeric character 54 onto the bale 22, thereby marking the bale 22 with the desired alpha-numeric character 54 to communicate the characteristic of the bale 22. For example, the print device 35 may be configured as a stamp the applies an ink to the bale 22. The actuator 42 may press the print device 35 against the bale 22 to impart/transfer the ink onto the bale 22, such as shown in phantom in FIG. 3, and then withdraw the print device 35 from the bale 22. In other implementations, the print device 35 may be configured as a paint device the sprays a paint onto the bale 22. The actuator 42 may engage the spray device to dispense a stream of paint onto the bale 22. The bale 22 with the desired alpha-numeric character 54 printed thereon is shown in FIG. 4.

In one aspect of the disclosure, the marker controller 46 and/or the marking algorithm 52 may assign the desired alpha-numeric character 54 of each bale 22 to one of a plurality of different groups. For example, the marker controller 46 may define the desired alpha-numeric character 54 for each respective bale 22 to equal a sequential production number, e.g., 1, 2, 3, ... n. The marker controller 46 may further define a plurality of groups based on a characteristic of the bale, such as but not limited to, weight, moisture content, ash content, crop type, etc. The marker controller 46 may then associate each respective production number with the group associated with the actual characteristic of the bale.

For example, if the groups are defined based on a moisture content, the marker controller 46 may define a first group for bales having a moisture content of between 0% to 10%, a second group for bales having a moisture content of between 10% to 15%, a third group for bales having a moisture content of between 15% and 18%, a fourth group for bales having a moisture content of between 18% and 25%, and a fifth group of bales having a moisture content of between 25% and 100%. For example, the marker controller may define the desired alpha-numeric character 54 for the twelfth (12^{th}) bale produced that day to equal "12", and measure the moisture content of that bale to be equal to 17.5%. the marker controller 46 may then associate the bale having the desired alpha-numeric character 54 defined to as "12" to the third group of bales, and store a list of all bales included in each of the respective groups on the memory 50 for later reference by an operator. For example, during a baling process in which a total of thirteen bales were produced, being defined with a respective sequential alpha-numeric character 54 production number 1-13, the second group of bales may be comprised of bale numbers 1, 2, 6, 7, and 8; the third group of bales may be comprised of bale numbers 3, 4, 5, 10, 12, and 13; and the fourth group of bales may be comprised of bales 9 and 11.

Once the baling process is complete, the operator may refer to the list of bales included in each group of bales, and collect all of the bales of each respective group of bales and store them together. For example, the operator may collect all of the bales of the third group of bales and store them together and/or separate from the other bales. The operator may use the desired alpha-numeric character 54 printed on each respective bale 22 to quickly and simply identify that bale 22.

It should be noted that the process described above for grouping the bales together is merely an example, and that the groups of bales 22, the desired alpha-numeric character 54, the characteristic of the bale 22, etc., may be defined differently than the example implementation described herein.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A baler implement (20) comprising:
a bale formation system (24) having a baling chamber (30) operable to form material into a bale (22);
a sensor (32A, 32B, 32C) arranged and operable to detect data related to a characteristic of the bale (22);
a print device (35) selectively configurable to print a plurality of available alpha-numeric characters on the bale (22);
a marker controller (46) in communication with the sensor (32A, 32B, 32C) and the print device (35), the marker controller (46) including a processor (48) and a memory (50) having a marking algorithm (52) stored thereon, wherein the processor (48) is operable to execute the marking algorithm (52) to:
receive data from the sensor (32A, 32B, 32C) related to the characteristic of the bale (22);
select a desired alpha-numeric character from the plurality of available alpha-numeric characters, based on the data from the sensor (32A, 32B, 32C), to communicate the characteristic of the bale (22); and
actuate the print device (35) to imprint the desired alpha-numeric character onto the bale (22), thereby marking the bale (22) with the desired alpha-numeric character to communicate the characteristic of the bale (22).

2. The baler implement (20) set forth in claim 1, wherein the print device (35) includes a plurality of individual print segments (36A-36G) that are actuatable in a plurality of combinations, with each individual one of the plurality of combinations forming a respective one of the plurality of available alpha-numeric characters.

3. The baler implement (20) set forth in claim 1 or 2, wherein the plurality of individual print segments (36A-36G) includes seven individual print segments (36A-36G).

4. The baler implement (20) according to at least one of the preceding claims, wherein the seven individual print segments (36A-36G) are arranged in a numeric eight configuration.

5. The baler implement (20) according to at least one of the preceding claims, wherein each of the plurality of individual print segments (36A-36G) is independently controllable to apply a marking mixture (38) to the bale (22).

6. The baler implement (20) according to at least one of the preceding claims, wherein the marking mixture (38) includes one of a paint, a die, or an ink.

7. The baler implement (20) according to at least one of the preceding claims, wherein the processor (48) is operable to execute the marking algorithm (52) to select a combination of the plurality of individual print segments (36A-36G) to form the desired alpha-numeric character.

8. The baler implement (20) according to at least one of the preceding claims, further comprising an actuator (42) coupled to the print device (35) and operable in response to a control signal from the marker controller (46) to move the print device (35) into abutting engagement with the bale (22) to imprint the desired alpha-numeric character onto the bale (22) and out of abutting engagement with the bale (22) when not marking the bale (22).

9. The baler implement (20) according to at least one of the preceding claims, wherein the sensor (32A, 32B, 32C) includes a moisture sensor (32A) operable to sense data related to a moisture content of the bale (22), and the characteristic of the bale (22) includes a moisture content of the bale (22).

10. The baler implement (20) according to at least one of the preceding claims, wherein the sensor (32A, 32B, 32C) includes an identification sensor (32B) operable to sense data related to an identifier of the bale (22), and the characteristic of the bale (22) includes an identification of the bale (22).

11. The baler implement (20) according to at least one of the preceding claims, wherein the sensor (32A, 32B, 32C) includes a weight sensor (32C) operable to sense data related to a weight of the bale (22), and the characteristic of the bale (22) includes the weight of the bale (22).

12. The baler implement (20) according to at least one of the preceding claims, further comprising a second print device (44) positioned adjacent the print device (35), wherein the second print device (44) includes a plurality of individual print segments (56A-56G) that are actuatable in a plurality of combinations, with each individual one of the plurality of combinations of the second print device (44) forming a respective one of the plurality of available alpha-numeric characters, whereby the print device (35) and the second print device (44) are actuatable in unison to simultaneously imprint two of the plurality of available alpha-numeric characters onto the bale (22) to form the desired alpha-numeric character onto the bale (22).

13. A print system for a baler implement, in particular a baler implement according to at least one of the claims 1 to 12, the print system comprising:
a print device having a plurality of individual print segments that are actuatable in a plurality of combinations, with each individual one of the plurality of combinations forming a respective one of a plurality of available alpha-numeric characters;
an actuator coupled to the print device and operable in response to a control signal to move the print device into abutting engagement with a bale on the baler implement to imprint a desired alpha-numeric character onto the bale and out of abutting engagement with the bale when not marking the bale;
a marker controller in communication with the print device and the actuator, the marker controller including a processor and a memory having a marking algorithm stored thereon, wherein the processor is operable to execute the marking algorithm to:
select the desired alpha-numeric character from the plurality of available alpha-numeric characters;
select one of the plurality of combinations of the plurality of individual print segments to form the desired alpha-numeric character; and
engage the actuator to move the print device into abutting engagement with the bale to imprint the desired alpha-numeric character onto the bale, thereby marking the bale with the desired alpha-numeric character.

14. The print system set forth in claim 13, further comprising a sensor operable to detect data related to a characteristic of the bale and communicate the data to the marker controller.

15. The print system set forth in claim 14, wherein the processor is operable to execute the marking algorithm to select the desired alpha-numeric character from the plurality of available alpha-numeric characters, based on the data from the sensor, to communicate the characteristic of the bale.
